# EUROPEAN PATENT APPLICATION

(11) **EP 4 793 319 A1**
(43) Date of publication of application: **19.08.2026**
(21) Application number: 24786335.0
(22) Date of filing: 18.09.2024
(51) Int. Cl.: C08L 69/00, C08L 83/10, C08L 83/04

(54) **CHEMICAL-RESISTANT POLYCARBONATE COMPOSITION AND PREPARATION METHOD THEREFOR**

(30) Priority: 10.10.2023 CN 202311304695
(71) Applicant: Shenzhen Yuanchuang Chemical Technology Co., Ltd., Shenzhen, Guangdong 518000 (CN)
(72) Inventor: REN, Zhigang, Shenzhen, Guangdong 518000 (CN); WANG, Weilin, Shenzhen, Guangdong 518000 (CN); LU, Jinsheng, Shenzhen, Guangdong 518000 (CN); YANG, Weihao, Shenzhen, Guangdong 518000 (CN)
(74) Representative: Metida
(86) International application number: PCT/CN2024/119359
(87) International publication number: WO 2025/077531

(57) **Abstract**

The present invention relates to the field of IPC C08L69, and more specifically relates to a chemical-resistant polycarbonate composition and a preparation method therefor. The composition includes 15-30 parts of a polycarbonate-polysiloxane copolymer, 50-90 parts of a bisphenol A polycarbonate, 20-40 parts of a polycarbonate master batch, and 0.01-0.1 part of an additive; and the composition includes the polycarbonate-polysiloxane copolymer having a ratio of a polysiloxane block of 15-30 wt%. By adding an organic silicon composition SFR 100, the resistance of a polycarbonate material to corrosion of chemical agents can be obviously improved without cracking, such that the polycarbonate material can be applied to the fields of medical treatment and electronic equipment. An E value (polymerization unit) is 40-100, and a proportion of the polycarbonate-polysiloxane copolymer in the composition is greater than 17.5 wt%, such that chemical resistance of the composition can be maintained, and a residual elongation at break can be maintained between 80% and 139%.

## Description

### FIELD OF TECHNOLOGY

The present invention relates to the technical field of polycarbonates, in particular to the field of IPC C08L69, and more specifically relates to a chemical-resistant polycarbonate composition and a preparation method therefor.

### BACKGROUND

Polycarbonates (PCs) are a kind of engineering plastics with excellent properties, which have the advantages of high transparency, good dimensional stability, good mechanical properties, high heat resistance, etc., and have been widely used in medical apparatuses and instruments, electronic products, office supplies, optical discs, sports equipment, buildings, computers, aerospace and other fields. However, the PCs also have certain defects, such as poor chemical resistance and easy stress cracking after touching solvents. In order to broaden application fields, the polycarbonates need to be modified. In the prior art, the low temperature impact resistance, chemical corrosion resistance and aging resistance of the polycarbonates are improved by adding silicon series for modification and using a blending method.

CN111742011B discloses a polycarbonate composition, including: 10-99 wt% of one or more bisphenol A polycarbonate homopolymers based on a total weight of the polycarbonate composition; and a poly(carbonate-siloxane) having a siloxane content of 30-70 wt%, preferably 35-65 wt%, based on a total weight of the poly(carbonate-siloxane). Optionally, the poly(carbonate-siloxane) is a poly(carbonate-siloxane) elastomer at an amount effective to provide a total siloxane content based on 0.5-10 wt% of the total weight of the polycarbonate composition. Moreover, a sample of the composition has improved chemical resistance compared with a reference composition, but mechanical properties and chemical resistance of the composition cannot be balanced.

### SUMMARY

In a first aspect, the present invention provides a chemical-resistant polycarbonate composition. The composition includes a polycarbonate-polysiloxane copolymer having a ratio of a polysiloxane block of 15-30 wt%.

Preferably, the composition includes the polycarbonate-polysiloxane copolymer having the ratio of the polysiloxane block of 18-25 wt%.

Further preferably, the composition includes the polycarbonate-polysiloxane copolymer having the ratio of the polysiloxane block of 20 wt%.

Preferably, a proportion of the polycarbonate-polysiloxane copolymer in the composition is greater than 17.5 wt%.

Further preferably, the proportion of the polycarbonate-polysiloxane copolymer in the composition is 17.5-40 wt%.

An average molecular weight of the polycarbonate-polysiloxane copolymer is 15,000-155,000.

Preferably, the average molecular weight of the polycarbonate-polysiloxane copolymer is 45,000-115,000.

The polysiloxane block has a structural general formula of a, wherein R₁ and R₂ are selected from a first group, and the first group includes one of C₁₋₁₃ alkyl, C₁₋₁₃ alkoxy, C₂₋₁₃ alkenyl, C₂₋₁₃ alkenoxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkyleneoxy, C₇₋₁₃ alkylarylene, or C₇₋₁₃ alkylaryleneoxy. The foregoing group may be completely or partially halogenated with fluorine, chlorine, bromine, or iodine, or a combination thereof.

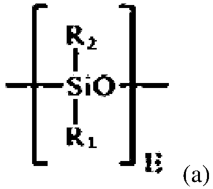

The R₁ and the R₂ are the first group further including a halogen element partially halogenated or completely halogenated.

The polysiloxane block has a structural general formula of b, wherein Ar₁ and Ar₂ are selected from one of substituted or unsubstituted C₆₋₃₀ arylene and C₆₋₃₀ dihydroxyarylene, and aromatic parts of the Ar₁ and the Ar₂ are bonded into the polysiloxane block.

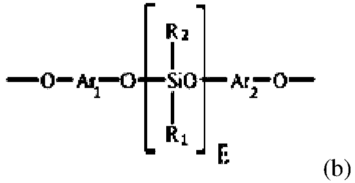

The C₆₋₃₀ dihydroxyarylene includes one of 1,1-bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxyphenyl)cyclohexane, bis(4-hydroxyphenyl sulfide), and 1,1-bis(4-hydroxy-tert-butylphenyl)propane.

Preferably, the polysiloxane block includes one of structures of b1-b5.

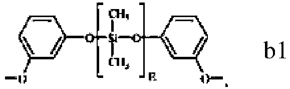

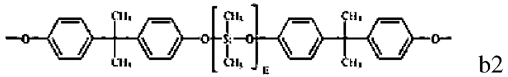

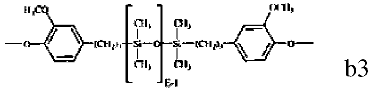

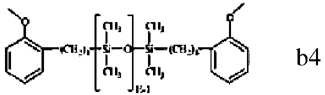

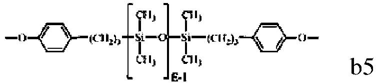

Further preferably, the polysiloxane block has the structure of b5.

An E value (polymerization unit) is 40-100.

Preferably, the E value is 70-100.

The composition further includes a bisphenol A polycarbonate, a polycarbonate master batch, and an additive.

Preferably, calculated in parts by weight, the composition includes 15-30 parts of the polycarbonate-polysiloxane copolymer, 50-90 parts of the bisphenol A polycarbonate, 20-40 parts of the polycarbonate master batch, and 0.01-0.1 part of the additive.

Further preferably, calculated in parts by weight, the composition includes 17.5-30 parts of the polycarbonate-polysiloxane copolymer, 50-80 parts of the bisphenol A polycarbonate, 20-40 parts of the polycarbonate master batch, and 0.01-0.06 part of the additive.

The polycarbonate master batch includes an organic silicon composition and a bisphenol A polycarbonate.

The organic silicon composition includes an organic silicon resin and a polyorganosiloxane.

The organic silicon resin includes one or more M units of a formula R₃SiO1/2 and one or more Q units of a formula SiO4/2, and optionally includes one or more D units of a formula R₂SiO2/2 and one or more T units of a formula RSiO3/2, wherein each R is independently a monovalent hydrocarbon group having 1-60 carbon atoms.

Preferably, a viscosity of the organic silicon composition (25°C) is 200,000-900,000 cps.

Preferably, a weight ratio of the organic silicon composition to the bisphenol A polycarbonate is (5-20):(80-95).

The organic silicon composition may also be commercially available, preferably, having a trade name of SFR 100 purchased from Momentive Performance Materials Inc.

The applicant accidentally finds that by adding the organic silicon composition SFR 100 and controlling the weight ratio of the organic silicon composition to the bisphenol A polycarbonate at (5-20):(80-95), the resistance of a polycarbonate material to corrosion of chemical agents can be obviously improved without cracking, such that the polycarbonate material can be applied to the fields of medical treatment and electronic equipment. Under normal conditions, the SFR 100 is used as a flame retardant and is usually used with organic salts of Group IIA metals to provide varying degrees of flame retardancy. However, it is unexpectedly found that the SFR 100 improves the resistance of the polycarbonate material to chemical agents in the system, and it is speculated that the SFR 100 may be embedded in a gap of a siloxane network structure, thereby increasing the hydrogen bond density of the network structure.

The applicant finds through research that the E value (polymerization unit) is 40-100, and the proportion of the polycarbonate-polysiloxane copolymer in the composition is greater than 17.5 wt%, such that chemical resistance of the composition can be maintained, and a residual elongation at break can be maintained between 80% and 139%. The toughness of the network structure and the density of crosslinking points may be balanced, and the SFR 100 provides a higher hydrogen bond density to maintain an acting force between chains while maintaining a certain degree of slipping between the chains under an external force.

Preferably, the additive includes an antioxidant, and the antioxidant includes one or more of an antioxidant 1010, an antioxidant 264, an antioxidant BHT, an antioxidant 2246, and an antioxidant 168.

Preferably, a melt flow index (ISO1133) of the bisphenol A polycarbonate is 2-40 g/10 min.

Preferably, the melt flow index (ISO1133) of the bisphenol A polycarbonate is 6-30 g/10 min.

Preferably, the bisphenol A polycarbonate includes compounding of two bisphenol A polycarbonates with different melt flow indexes, including a first bisphenol A polycarbonate and a second bisphenol A polycarbonate, the melt flow index (ISO1133) of the first bisphenol A polycarbonate is 20-30 g/10 min, and the melt flow index (ISO1133) of the second bisphenol A polycarbonate is 6-15 g/10 min.

Preferably, a weight ratio of the first phenol A polycarbonate to the second bisphenol A polycarbonate is 1:(0.5-8).

Further preferably, the weight ratio of the first phenol A polycarbonate to the second bisphenol A polycarbonate is 1:(1-4).

In a second aspect, the present invention provides a preparation method for a chemical-resistant polycarbonate composition, including the following steps: evenly mixing a polycarbonate-polysiloxane copolymer, a bisphenol A polycarbonate, a polycarbonate master batch, and an additive, and performing granulation to obtain a chemical-resistant polycarbonate composition.

### Beneficial effects:

1. By adding the organic silicon composition SFR 100 and controlling the weight ratio of the organic silicon composition to the bisphenol A polycarbonate at (5-20):(80-95), the resistance of a polycarbonate material to corrosion of chemical agents can be obviously improved without cracking, such that the polycarbonate material can be applied to the fields of medical treatment and electronic equipment.
2. The E value (polymerization unit) is 40-100, and the proportion of the polycarbonate-polysiloxane copolymer in the composition is greater than 17.5 wt%, such that chemical resistance of the composition can be maintained, and a residual elongation at break can be maintained between 80% and 139%.
3. The bisphenol A polycarbonate includes compounding of two bisphenol A polycarbonates with different melt flow indexes, including a first bisphenol A polycarbonate and a second bisphenol A polycarbonate, the melt flow index (ISO1133) of the first bisphenol A polycarbonate is 20-30 g/10 min, and the melt flow index (ISO1133) of the second bisphenol A polycarbonate is 6-15 g/10 min. Moreover, the weight ratio of the first phenol A polycarbonate to the second bisphenol A polycarbonate is 1:(0.5-8), such that the intensity of the composition can be further improved, and a residual tensile yield is maintained at 90% or above.

### BRIEF DESCRIPTION OF THE DRAWINGS

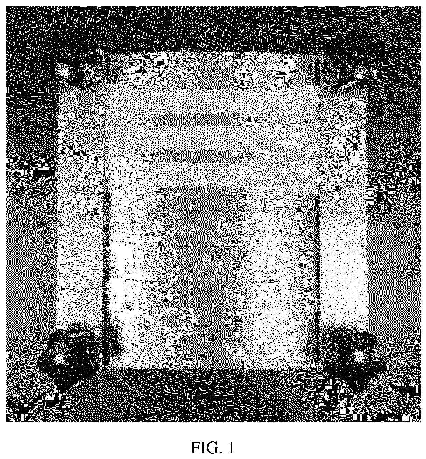

FIG. 1 is a test image of Example 1 and Comparative Example 1 on BANANA BOAT^{®}SPF30 at a deformation of 1% after exposure for 7 days, wherein three non-transparent pieces at an upper part represent Example 1, and three transparent parts at a lower part represent Comparative Example 1.

### DESCRIPTION OF THE EMBODIMENTS

Provided is a chemical-resistant polycarbonate composition. Calculated in parts by weight, formulations of compositions in Examples 1-2 and Comparative Examples 1-6 are shown in Table 1.

**Table 1**

| | Comparative Example 1 | Comparative Example 2 | Comparative Example 3 | Comparative Example 4 | Comparative Example 5 | Comparative Example 6 | Example 1 | Example 2 |
|---|---|---|---|---|---|---|---|---|
| A1 | | 22.5 | | | 17.5 | 15 | 20 | 17.5 |
| A2 | | | 22.5 | 22.5 | | | | |
| PC-1 | 40 | 55 | 55 | 35 | 21.5 | 45 | 35 | 11.5 |
| PC-2 | 60 | 22.5 | 22.5 | 22.5 | 41 | | 25 | 41 |
| Silox MB | | | | 20 | 20 | 40 | 20 | 30 |
| C1 | 0.06 | 0.06 | 0.06 | 0.06 | 0.06 | 0.06 | 0.06 | 0.06 |

C1 is an antioxidant 168 (BASF).

PC-1 is a phosgenation bisphenol A polycarbonate with a melt flow index of 30 g/10 min, which is manufactured by Idemitsu Kosan, and has a model No. FN1700.

Silox MB is a polycarbonate master batch containing 10 wt% of SFR100 [an organic silicon resin, purchased from Momentive Performance Materials Inc.].

A preparation method for the Silox MB includes mixing SFR100 and PC-1 in a vertical mixer at a weight ratio of 1:9 for 5 min, and performing extrusion granulation by a twin-screw extruder at 210°C to obtain the Silox MB.

PC-2 is a phosgenation bisphenol A polycarbonate with a melt flow index of 6 g/10 min, which is purchased from Wanhua Chemical, and has a model No. Z-2070.

A1 is siloxane copolymerized PC-1, a mass percentage of siloxane is 20%, a chain length (E) of the siloxane is equal to 45, and an Mw value of the siloxane copolymerized PC-1 is equal to 66,000 (based on polystyrene as a standard).

The chain length (E) of the siloxane in the A1 is equal to 45, and a preparation method for the siloxane with the E value equal to 45 is as follows.

Octamethylcyclotetrasiloxane (8.3 kg, 28 mol), tetramethyldisiloxane (330 g, 2.46 mol), and Filtrol bentonite 20 (86 g, 1% weight, Harshaw/Filtrol bentonite clay product) were together added to a 12 L flask and heated to 45°C to carry out a reaction for 2 h. The temperature was raised to 100°C, and a mixture was rapidly stirred for 5 h. The mixture was cooled and filtered through a diatomite filter aid plug to obtain a crude product.

A mixture of a eugenol oil (774 g, 4.72 mol) and a Karstedt platinum catalyst (1.57 g, 10 ppm of Pt) was added to the crude product at a rate of 40 g/min. Infrared spectroscopy was used to monitor the disappearance of hydrosiloxane as a reaction endpoint. Volatiles of a reaction product were removed by a falling film evaporator at 200°C and 1.5 torr (two thousandths of a standard atmosphere). A separated raw material was a light brown oily compound with a viscosity of 100 cst at 25°C so as to obtain the siloxane.

A2 is siloxane copolymerized PC-2, a mass percentage of siloxane is 20%, and an Mw value of the siloxane copolymerized PC-2 is equal to 66,000 (based on polystyrene as a standard).

The A2 is a siloxane copolymerized bisphenol A polycarbonate, a chain length (E) of siloxane is equal to 30, a mass percentage of the siloxane is 20%, and an Mw value is equal to 66,000 (based on polystyrene as a standard).

The chain length (E) of the siloxane in the A2 is equal to 30, and a preparation method for the siloxane with the E value equal to 30 is as follows.

Octamethylcyclotetrasiloxane (8.3 kg, 28 mol), tetramethyldisiloxane (1,006 g, 7.5 mol), and Filtrol bentonite 20 (86 g, 1% weight, Harshaw/Filtrol bentonite clay product) were together added to a 12 L flask and heated to 45°C to carry out a reaction for 2 h. The temperature was raised to 100°C, and a mixture was rapidly stirred for 5 h. The mixture was cooled and filtered through a diatomite filter aid plug to obtain a crude product.

A mixture of a eugenol oil (2,322 g, 14.4 mol) and a Karstedt platinum catalyst (4.5 g, 10 ppm of Pt) was added to the crude product at a rate of 40 g/min. Infrared spectroscopy was used to monitor the disappearance of hydrosiloxane as a reaction endpoint. Volatiles of a reaction product were removed by a falling film evaporator at 200°C and 1.5 torr (two thousandths of a standard atmosphere). A separated raw material was a light brown oily compound with a viscosity of 100 cst at 25°C so as to obtain the siloxane.

A preparation method for the A1 is as follows.

The following materials were placed into a 500 ml five-neck flask with a stirrer, a condensing tube, a pH meter, and two constant-pressure dropping funnels. 28.5 g of bisphenol A (PC-1), 9.22 g of phenol terminated siloxane (siloxane with an E value equal to 45), 0.72 g of alkyl ammonium chloride, 120 ml of dichloromethane, and 65 ml of deionized water were added.

In addition, 18.0 g of triphosgene was dissolved in 35 ml of dichloromethane. Under the condition of starting stirring, a triphosgene solution was dropped into the flask within 1 h, and an appropriate amount of a 30% caustic soda solution was added to reach a pH value of 5-6 and a temperature of 20-30°C. Then, the pH value was adjusted to 11, and stirring was performed for 15 min. When the pH value was maintained at 11, 0.8 g of p-cumylphenol and 0.48 g of triethylamine were added, and a reaction temperature was raised to 25-35°C. Stirring was performed continuously for 15 min. A reaction was stopped, and standing was performed for layering. An organic phase in a lower layer was washed with 1 mol of hydrochloric acid, and washed with an equal volume of deionized water for several times. When a part of a solvent was removed from the organic layer, a polymerization product was precipitated with methanol. A precipitate was filtered and dried to obtain the A1.

A preparation method for the A2 is as follows.

The following materials were placed into a 500 ml five-neck flask with a stirrer, a condensing tube, a pH meter, and two constant-pressure dropping funnels. 28.5 g of bisphenol A (PC-1), 9.22 g of phenol terminated siloxane (siloxane with an E value equal to 30), 0.72 g of alkyl ammonium chloride, 120 ml of dichloromethane, and 65 ml of deionized water were added. In addition, 18.0 g of triphosgene was dissolved in 35 ml of dichloromethane. Under the condition of starting stirring, a triphosgene solution was dropped into the flask within 1 h, and an appropriate amount of a 30% caustic soda solution was added to reach a pH value of 5-6 and a temperature of 20-30°C. Then, the pH value was adjusted to 11, and stirring was performed for 15 min. When the pH value was maintained at 11, 0.8 g of p-cumylphenol and 0.48 g of triethylamine were added, and a reaction temperature was raised to 25-35°C. Stirring was performed continuously for 15 min. A reaction was stopped, and standing was performed for layering. An organic phase in a lower layer was washed with 1 mol of hydrochloric acid, and washed with an equal volume of deionized water for several times. When a part of a solvent was removed from the organic layer, a polymerization product was precipitated with methanol. A precipitate was filtered and dried to obtain the A2.

A preparation method for a chemical-resistant polycarbonate composition includes the steps: evenly mixing components in a formulation, and performing twin-screw granulation to obtain a chemical-resistant polycarbonate composition.

A temperature of the granulation is 260°C.

### Performance test methods

Particles of the compositions prepared in examples and comparative examples were prepared into samples by injection molding. ISO tensile splines were subjected to injection molding at a temperature of 275°C. Before the injection molding, the particles were baked at 120°C for 3 h. Tensile properties were measured on a standard ISO tensile rod at 50 mm/min at room temperature according to ISO527.

Environmental stress cracking resistance (ESCR) describes accelerated destruction of a polymeric material to serve as a combined effect of environment, temperature, and stress. The destruction mainly depends on characteristics of the material, chemical properties, exposure conditions, and the magnitude of stress. The ISO tensile splines were clamped to a semi-circular clamp to impart a constant strain of 1.0%. Then, these splines were exposed to BANANA BOAT ^{®}SPF30 (sunscreen) and SANICLOTH AF3 (disinfecting wipe) at 23°C. Specific steps are as follows. While two swabs were hold together, about 1 m1 of chemicals were applied to the samples, wherein the chemicals were spread in a circular motion manner around a central part and outwards to tail ends of the samples until the chemicals reached a length of 25 mm. Any excess chemicals located on side surfaces of test rods were removed. The splines placed at a deformation of 1% and the clamp were fixed and placed into sealing pockets for 7 days. Criteria used to assess chemical resistance are shown in Table 2.

The melt volume rate (MVR) was determined according to ISO1133 at 300°C under a load of 1.2 kg for a retention time of 360 s.

Combined with FIG. 1, performance test data are shown in Table 3.

### Performance test data

**Table 2**

| Grade | Abbreviation | Retention rate of yield strength, *σ_{y}* | Retention rate of elongation at break, *ε_{b}* | Inference |
|---|---|---|---|---|
| Compatible | C | ≥90% | 80-139% | Performance retention |
| Margin | M | 80-89% | 65-79% | Staying at a failure margin |
| Non-compatible | NC | ≤79% | <65% | Cracking/fracture observed |
| | | ≥140% | | Plasticization; spline softening |

**Table 3**

| | Compar ative Example 1 | Compar ative Example 2 | Compa rative Example 3 | Compar ative Example 4 | Compar ative Example 5 | Compar ative Example 6 | Exampl e 1 | Exampl e 2 |
|---|---|---|---|---|---|---|---|---|
| MVR (g/10min) | 9.5 | 9.7 | 9.5 | 10.8 | 7.3 | 8.8 | 7.5 | 7.8 |
| BANANA BOAT ^{®}SPF30, deformation 1%, exposure for 7 days | NC, all cracked | NC, one piece cracked | NC, all cracked | NC, two pieces cracked | NC, one piece cracked | NC, one piece cracked | C | C |
| SANI Cloth^{®} AF3, deformation 1%, exposure for 7 days | NC, all cracked | NC, one piece cracked | NC, all cracked | NC, one piece cracked | NC, one piece cracked | NC, one piece cracked | C | C |

From Table 3 above, it can be seen that for pure PC and copolymerized PC mixed with 22.5% of the siloxane with the chain length of either 30 or 45, all modified materials cannot have the resistance to erosion of BANANA BOAT ^{®}SPF30 and SANI Cloth^{®} AF3.

After the Silox MB containing 2% of the SFR100 is added under the condition that the content of the siloxane PC with the chain length of 45 is 20%, the resistance to erosion of BANANA BOAT ^{®}SPF30 and SANI Cloth^{®} AF3 can be achieved.

After the Silox MB containing 2% of the SFR100 is added under the condition that the content of the siloxane PC with the chain length of 45 is decreased to 17.5%, the resistance becomes worse. After the Silox MB is increased to contain 3% of the SFR100, the resistance is restored. After the Silox MB is increased to contain 4% of the SFR100 under the condition that the content of the siloxane PC with the chain length of 45 is decreased to 15%, the resistance is not restored.

After the Silox MB containing 2% of the SFR100 is added under the condition that the content of the siloxane PC with the chain length of 30 is 20%, the resistance to erosion of BANANA BOAT ^{®}SPF30 and SANI Cloth^{®} AF3 still cannot be achieved.

In order to minimally obtain PC modified materials with resistance to erosion of BANANA BOAT ^{®}SPF30 and SANI Cloth^{®} AF3, the essential content of 17.5% or above, the siloxane PC with the essential chain length of 45, and the content of the SFR100 master batch are all influencing factors.

## Claims

1. A chemical-resistant polycarbonate composition, **characterized in that** the composition comprises a polycarbonate-polysiloxane copolymer having a ratio of a polysiloxane block of 15-30 wt%.

2. The chemical-resistant polycarbonate composition according to claim 1, **characterized in that** a proportion of the polycarbonate-polysiloxane copolymer in the composition is greater than 17.5 wt%.

3. The chemical-resistant polycarbonate composition according to claim 1, **characterized in that** an average molecular weight of the polycarbonate-polysiloxane copolymer is 15,000-155,000.

4. The chemical-resistant polycarbonate composition according to claim 3, **characterized in that** the polysiloxane block has a structural general formula of a, wherein R₁ and R₂ are selected from a first group, and the first group comprises one of C₁₋₁₃ alkyl, C₁₋₁₃ alkoxy, C₂₋₁₃ alkenyl, C₂₋₁₃ alkenoxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkyleneoxy, C₇₋₁₃ alkylarylene, or C₇₋₁₃ alkylaryleneoxy.

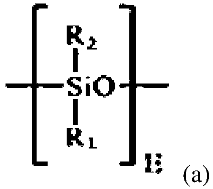

5. The chemical-resistant polycarbonate composition according to claim 4, **characterized in that** the R₁ and the R₂ are the first group further comprising a halogen element partially halogenated or completely halogenated.

6. The chemical-resistant polycarbonate composition according to claim 5, **characterized in that** the polysiloxane block has a structural general formula of b, wherein E is a polymerization unit, wherein Ar₁ and Ar₂ are selected from one of substituted or unsubstituted C₆₋₃₀ arylene and C₆₋₃₀ dihydroxyarylene, and aromatic parts of the Ar₁ and the Ar₂ are bonded into a main chain of the polysiloxane block.

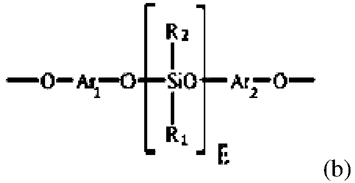

7. The chemical-resistant polycarbonate composition according to claim 6, **characterized in that** the C₆₋₃₀ dihydroxyarylene comprises one of 1,1-bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxyphenyl)cyclohexane, bis(4-hydroxyphenyl sulfide), and 1,1-bis(4-hydroxy-tert-butylphenyl)propane.

8. The chemical-resistant polycarbonate composition according to claim 7, **characterized in that** the E in the structural general formula b of the polysiloxane block is 40-100.

9. The chemical-resistant polycarbonate composition according to claim 1 or 8, **characterized in that** the composition further comprises a bisphenol A polycarbonate, a polycarbonate master batch, and an additive.

10. The chemical-resistant polycarbonate composition according to claim 9, **characterized in that** the polycarbonate master batch comprises an organic silicon composition and a bisphenol A polycarbonate, and the organic silicon composition comprises an organic silicon resin and a polyorganosiloxane.

11. The chemical-resistant polycarbonate composition according to claim 10, **characterized in that** the organic silicon resin comprises one or more M units of a formula R₃SiO1/2 and one or more Q units of a formula SiO4/2, and optionally comprises one or more D units of a formula R₂SiO2/2 and one or more T units of a formula RSiO3/2, wherein each R is independently a monovalent hydrocarbon group having 1-60 carbon atoms.

12. The chemical-resistant polycarbonate composition according to claim 11, **characterized in that** a viscosity of the organic silicon composition is 200,000-900,000 cps.

13. A preparation method for the chemical-resistant polycarbonate composition according to claim 12, **characterized in that** the preparation method comprises the following steps: evenly mixing the polycarbonate-polysiloxane copolymer, the bisphenol A polycarbonate, the polycarbonate master batch, and the additive, and performing granulation to obtain the chemical-resistant polycarbonate composition.
